# EUROPÄISCHE PATENTSCHRIFT

(11) **EP 0 467 249 B1**
(45) Veröffentlichungstag und Bekanntmachung des Hinweises auf die Patenterteilung: **10.04.1996**
(21) Anmeldenummer: 91111716.6
(22) Anmeldetag: 13.07.1991
(51) Int. Cl.: B62D 63/06, B60P 3/12

(54) **Autotransport-Anhänger**
Car transportation trailer
Remorque pour le transport de voitures

(30) Priorität: 17.07.1990 DE 9010674 U
(43) Veröffentlichungstag der Anmeldung: 22.01.1992
(73) Patentinhaber: Neumann, Siegfried, D-47574 Goch (DE)
(72) Erfinder: Neumann, Siegfried, D-47574 Goch (DE)

(56) Entgegenhaltungen:
- DE-A- 3 017 007
- DE-A- 3 040 515
- FR-A- 2 257 463
- FR-A- 2 357 401

## Beschreibung

Die Neuerung betrifft einen Autotransport-Anhänger mit wenigstens einer Achse mit Laufrädern an beiden Enden der Achse und mit zwei in Fahrzeuglängsrichtung orientierten und um eine quer zur Fahrzeuglängsrichtung verlaufende Achse kippbaren Laufschienen für die zu transportierenden Autos, wobei die Laufschienen im Bereich der Laufräder je einen Radkasten bilden.

Ein bekannter Anhänger zum Transportieren von Autos, insbesondere Personenkraftwagen hat zwei gerade Laufschienen, die einen der Spur des zu transportierenden Autos entsprechenden Abstand quer zur Fahrzeuglängsrichtung zueinander haben und die etwas länger sind, als der Achsabstand des zu transportierenden Autos. Bei diesen bekannten Anhängern ist die Spur wesentlich breiter als die Spur des Zugfahrzeuges. Der Schwerpunkt liegt zwar zum Erreichen guter Fahreigenschaften tief. Der Nachteil dieses Anhängers besteht jedoch darin, daß er eine vergleichsweise breite Spur hat, was beispielsweise beim Durchfahren schmaler Straßen und dgl. zu Schwierigkeiten führt (s.Z.B. DE-A-30 40 515).

Es ist auch ein Fahrzeugtransport-Anhänger bekannt, der eine normale Spur aufweist und dessen Laufschienen zum Tragen von Autos die Radkästen bilden. Auch bei diesen Anhängern liegt zum Erreichen guter Fahreigenschaften der Schwerpunkt tief. Der Nachteil besteht jedoch darin, daß beim Beladen und Entladen des Anhängers die zu transportierenden Autos über die Radkästen fahren müssen (s.Z.B. DE-A-30 17 007).

Die vorstehend beschriebenen Fahrzeugtransport-Anhänger verfügen über zwei Laufschienen und eine Kippeinrichtung, mit der die Laufschienen vorn angehoben werden können, damit von hinten her das zu transportierende Auto auf die Laufschiene fahren und diese wieder verlassen kann.

Die bekannten Autotransport-Anhänger verfügen somit entweder über gerade Laufschienen und eine breite Bauart bzw. breite Spur oder aber über geknickte Laufschienen und über eine schmale Bauart bzw. eine normale Spur.

Der Neuerung liegt die Aufgabe zugrunde, einen Autotransport-Anhänger der einleitend genannten Art zu schaffen, der bei schmaler Bauart bzw. normaler Spur über gerade Laufschienen beim Beladen und Entladen sowie über geknickte Laufschienen zur Bildung der Radkästen beim Transport des zu transportierenden Autos verfügt.

Diese Aufgabe wird durch die Merkmale des kennzeichnenden Teils von Anspruch 1 gelöst.

Dieser Anhänger vereinigt die Vorteile der bekannten Anhänger unter gleichzeitiger Vermeidung der Nachteile dieser bekannten Anhänger. Er verfügt nämlich über eine schmale Bauart und über gerade Laufschienen und vermeidet somit geknickte Laufflächen bei schmaler Bauart bzw. eine breite Bauart mit geraden Laufschienen.

Hinzu kommt, daß durch das Absenken der Laufschienen die Radkästen sich so verformen, daß diese gleichzeitig als Fahrzeugbefestigung dienen, somit ein Abrollen des zu transportierenden Autos von dem Anhänger mit Sicherheit zu vermeiden ist.

Nach einem weiteren Merkmal der Neuerung ist vorgesehen, daß an dem Chassis im Bereich der Radkästen zwei Auflageböcke vorgesehen sind. Hierdurch ist sichergestellt, daß die Radkästen auf Auflagern aufliegen und sich dadurch nicht ungewollt weit durchbiegen.

Weitere vorteilhafte Merkmale der Neuerung ergeben sich aus den Unteransprüchen.

Die Neuerung wird nachfolgend anhand eines in der Zeichnung dargestellten Ausführungsbeispieles des näheren erläutert.

Es zeigt
- Fig. 1: eine perspektivische Darstellung eines Autotransport-Anhängers in abgesenkter Stellung der Laufschienen,
- Fig. 2: eine perspektivische Darstellung des in Figur 1 dargestellten Autotransport-Anhängers in gekippter Stellung der Laufschienen und
- Fig. 3: eine Darstellung eines Radkastens in einer gemeinsamen Ebene.

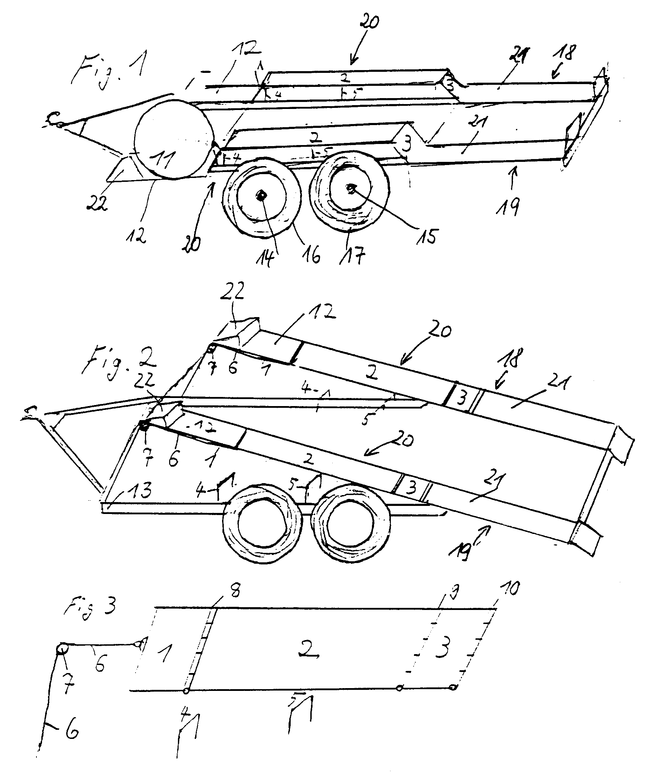

Der Anhänger hat zwei Achsen 14,15 mit Rädern 16,17 an den Enden der Achsen 14,15. Auf dem Chassis 13 sind in der Spur der zu transportierenden Autos entsprechendem Abstand quer zur Fahrzeuglängsrichtung Laufschienen 18,19 vorgesehen. Die Laufschiene 18 besteht aus einem aus den Platten 1,2,3 bestehenden Radkasten 20 und aus vor dem Radkasten 20 angeordneten Ladeflächen 12 und 21. Desgleichen besteht die in Figur 1 vorn dargestellte Laufschiene 19 aus einem aus den Platten 1,2,3 bestehenden Radkasten 20, an den sich in Fahrtrichtung die Ladefläche 12 und entgegen der Fahrtrichtung die Ladefläche 21 anschließen.

Am vorderen Ende der Ladeflächen 12 ist je ein Keil 22 in Längsrichtung verstellbar angeordnet, so daß die vorderen Räder des zu transportierenden Autos, von dem in Figur 1 beispielsweise das linke Vorderrad 11 dargestellt ist, zwischen dem Keil 22 und der vorderen Platte 1 des Radkastens 20 so eingefaßt ist, daß das zu transportierende Auto fest auf dem Anhänger aufsteht, ohne daß es einer weiteren Festlegung des zu transportierenden Autos bedarf.

An dem vorderen Ende der Radkästen 20, also an den Platten 1 ist jeweils mittig ein Seil 6 befestigt, das über eine an dem Anhänger fest angeordnete Umlenkrolle 7 geführt und mit dem Chassis 13 fest verbunden ist. Auf dem Chassis 13 sind Auflageböcke 4,5 vorgesehen, auf denen die oberen Platten 2 der Radkästen 20 abgestützt sind.

Die die Radkästen 20 bildenden Platten 1,2,3 sind durch in Fahrzeugquerrichtung verlaufende. Scharniergelenke 8,9 miteinander verbunden. Außerdem ist die hintere Platte 3 über ein Scharniergelenk 10 mit der hinteren Ladefläche 21 verbunden.

Ein dem Scharniergelenk 10 entsprechendes Scharniergelenk ist vorn an der Platte 1 nicht vorgesehen, so daß die Platte 1 sich gegenüber der vorderen Ladefläche 12 verschieben kann.

Beim Anheben der Ladeflächen 12, ausgehend von der in Figur 1 dargestellten abgesenkten Stellung, werden durch Zug auf das Seil 6 die die Radkästen 20 bildenden Platten 1,2,3 in eine gemeinsame Ebene gezogen, wie es in den Figuren 2 und 3 dargestellt ist. Hierdurch fallen die verstellten Radkästen 20 bzw. deren Platten 1,2,3 mit den Laufschienen 12,21 zusammen.

## Patentansprüche

1. Autotransport-Anhänger mit wenigstens einer Achse mit Laufrädern an beiden Enden der Achse und mit zwei in Fahrzeuglängsrichtung orientierten und um eine quer zur Fahrzeuglängsrichtung verlaufende Achse kippbaren Laufschienen für die zu transportierenden Autos, wobei die Laufschienen im Bereich der Laufräder je einen Radkasten (20) bilden, dadurch gekennzeichnet,
daß der Radkasten (20) aus drei Platten (1,2,3) besteht, die über quer zur Fahrzeuglängsrichtung verlaufende Schaniergelenke (8,9) miteinander verbunden sind, daß jeweils am vorderen Ende (1) der beiden Radkästen (20) ein Seil (6) im wesentlichen nach vorne wegführend befestigt ist, das über eine Umlenkrolle (7) geführt und an dem Chassis (13) befestigt ist.

2. Anhänger nach Anspruch 1, dadurch gekennzeichnet, daß an dem Chassis (13) im Bereich der Radkästen (20) zwei Auflageböcke (4,5) vorgesehen sind.

3. Anhänger nach Anspruch 1 oder 2, dadurch gekennzeichnet, daß die Auflageböcke (4,5) in Fahrzeuglängsrichtung voneinander distanziert sind.

4. Anhänger nach Anspruch 1, dadurch gekennzeichtet, daß der Radkasten (20) mit der hinteren Ladefläche (21) über ein quer zur Fahrzeuglängsrichtung verlaufendes Scharniergelenk (10) verbunden ist.

5. Anhänger nach einem der vorherigen Ansprüchen, dadurch gekennzeichnet, daß die Ladefläche (12) zum Beladen und Entladen des Anhängers vorn anhebbar bzw. hochkippbar sind.

6. Anhänger nach einem der vorherigen Ansprüche, dadurch gekennzeichnet, daß durch Anheben der vorderen Ladeflächen (12) die drei einen Radkasten (20) bildenden Platten (1,2,3) zusammen mit den Ladeflächen (12,21) eine gemeinsame gerade Laufschiene (18,19) bilden.

## Claims

1. Motorcar carrier trailer with at least one axis with running wheels at both ends of the axis and with two in vehicle longitudinal direction oriented running rails tiltable on an axis running transversely to the vehicle longitudinal direction for the vehicles to be transported, the running rails forming in the area of the running wheels one wheel box (20) each characterized in that
the wheel box (20) consists of three plates (1,2,3) connected with each other via hinged joints (8,9) running transversely to the vehicle longitudinal direction in that at the front end (1) each of the two wheel boxes (20) a rope (6) is fixed leading away forward essentially which is conducted across a deflection pulley (7) and is fixed on to the chassis (13).

2. Trailer according to claim 1, characterized in that on the chassis (13) in the area of the wheel boxes (20) two support frames (4,5) are provided.

3. Trailer according to claim 1 or 2, characterized in that the support frames (4,5) being in a distance from each other in the vehicle longitudinal direction.

4. Trailer according to claim 1, characterized in that the wheel box (20) is connected with the rear loading area (21) via a hinged joint (10) running transversely to the longitudinal direction of the vehicle.

5. Trailer according to one of the previous claims, chracterized in that the loading area (12) for loading and unloading of the trailer can in front be lifted or tilted respectively.

6. Trailer according to one of the previous claims, characterized in that the three plates (1,2,3) forming a wheel box (20) by lifting the front loading area (12) form together with the loading areas (12,21) a common straight running rail (18,19).

## Revendications

1. Remorque de porteur d'automobiles équippée d'au moins d'un axe avec des roues de roulement aux deux extrémités de la'axe et de deux rails de roulement orientés en direction longitudinale du véhicule et basculant sur un axe allant transversalement en direction longitudinale du véhicule pour les automobiles à transporter, les rails de roulement formant dans la zone des roues de roulement un carter de roue chacun (20) caractérisée
en ce que le carter de roue (20) est composé de trois plaques (1,2,3) reliées l'une avec l'autre par des articulations à charnière (8,9) allant transversalement en direction longitudinale du véhicule de sorte qu'un câble (6) est fixé à l'extrémité avant (1) des deux carters de roue (20) essentiellement sortant en avant, lequel est conduit à travers une poulie de guidage et est fixé au chassis (13).

2. Remorque suivant revendication 1 caractérisée en ce que au chassis (13) dans la zone des carters de roue (20) deux supports (4,5) sont prévus.

3. Remorque suivant revendication 1 ou 2 caractérisée en ce que les supports (4,5) sont distancés l'un de l'autre en direction longitudinale du véhicule.

4. Remorque suivant revendication 1 caractérisée en ce que le carter de roue (20) est relié avec la plateforme de chargement arrière (21) par une articulation à charnière (10) allant transversalement en direction longitudinale du véhicule.

5. Remorque suivant une des revendications précédente caractérisée en ce que la plateforme de chargement (12) peut être à la tête levée ou basculée vers le haut pour charger et décharger la remorque.

6. Remorque suivant une des revendications précédente caractérisée en ce que les trois plaques (1,2,3) formant un carter de roue (20) forment conjointement avec les plateformes de chargement (12, 21) un rail de roulement (18,19) commun et droit.
